(19) Europäisches Patentamt / European Patent Office / Office européen des brevets

(11) **EP 4 414 436 B1**

(12) **EUROPEAN PATENT SPECIFICATION**

(45) Date of publication and mention of the grant of the patent:
**06.05.2026 Bulletin 2026/19**

(21) Application number: **21959806.7**

(22) Date of filing: **06.10.2021**

(51) International Patent Classification (IPC):
**C09K 5/10** (2006.01)

(52) Cooperative Patent Classification (CPC):
**C09K 5/10**

(86) International application number:
**PCT/ES2021/070726**

(87) International publication number:
**WO 2023/057661 (13.04.2023 Gazette 2023/15)**

(54) **THERMAL FLUID USED INSIDE ALUMINIUM THERMAL EMITTERS, REPLACING MINERAL OIL DERIVED FROM PETROLEUM**

THERMISCHE FLÜSSIGKEIT ZUR VERWENDUNG IN ALUMINIUM-WÄRMEEMITTERN, ZUM ERSATZ VON MINERALÖL AUS ERDÖL

FLUIDE THERMIQUE UTILISÉ À L'INTÉRIEUR D'ÉMETTEURS THERMIQUES D'ALUMINIUM, REMPLAÇANT L'HUILE MINÉRALE PROVENANT DU PÉTROLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(43) Date of publication of application:
**14.08.2024 Bulletin 2024/33**

(73) Proprietor: **Copial - Compañía Pineda Álvarez, S.L.**
**41520 El Viso del Alcor - Sevilla (ES)**

(72) Inventor: **PINEDA ALVAREZ, Jose Manuel**
**41520 El Viso del Alcor (SEVILLA) (ES)**

(74) Representative: **Bartrina Diaz, José María**
**Aseslema Patentes y Marcas**
**PISA, C/ Industria, 3, Edf. Metropol 2, 2o 7**
**41927 Mairena del Aljarafe (Sevilla) (ES)**

(56) References cited:
**WO-A1-2018/013630    WO-A1-2021/105531**
**US-A- 3 948 792    US-A1- 2004 042 965**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Thermal fluid used inside aluminium thermal emitters, replacing mineral oil derived from petroleum.

## OBJECT OF THE INVENTION

The invention, as expressed in the statement of this descriptive report, refers to a biodegradable and ecological fluid, which is used inside aluminium thermal emitters, replacing mineral oil derived from petroleum.

The field of application of the present invention is the chemical sector and, more specifically, the air conditioning industry, and its application is in aluminium-based thermal emitters used in heating systems in general.

## BACKGROUND OF THE INVENTION

The "heat dissipation fluid," like any liquid, is stored in a device for this purpose. When heated using electrical resistance, it circulates inside the circuits of the device because of the difference in pressures that are generated, thereby heating its surrounding environment. Oil-based fluids are usually used in industrial heating systems with thermal oil, using a combustion chamber through a coil. Thus, in these applications, the coil takes energy from combustion, through the low-pressure pumped oil system that circulates through it. This leads it to behave like a thermal fluid that, by heating the coils, transmits the heat indirectly to a consumer, making use of the pertinent hydraulic circuit. Another common application of oil is as a thermal fluid inside a radiator, with a function very similar to the industrial use of thermal oil. In these applications, the radiator connected to the electrical network provides energy in the form of heat through resistors placed inside it. Specifically, these resistors are in direct contact with the fluid or thermal oil contained therein. This provides them with the necessary heat and pressure for it to expand, and to cause the corresponding flow of oil through the interior of the pipe circuit that contains the radiator, until it heats the environment that surrounds it. Oil comes from petroleum and, therefore, fossil fuels. The drawback of this is that it is frequently discharged into the environment without any control, making it a highly polluting fluid.

Thus, the technical problem to be solved is the need to change the oil as a heat dissipation fluid (such as highly refined mineral oil for its production as a petroleum derivative and, therefore, from fossil fuels), for another fluid that does not come from fossil fuels. This would improve the environmental impact of the devices that use it both throughout their useful life and afterwards, once it has become waste.

The invention of the same applicant with publication number WO2021/105531, called *"Heat transfer fluid with a composition based on the use of water,"* is known as the closest in the state of the art. It consists of the substitution of the thermal oil as a heat dissipation fluid, with another water-based fluid to which a set of constituents are added that gives it the appropriate characteristics to be used as a thermal fluid. This prevents it from producing the usual corrosion on the containers upon contact with water and also provides the following advantages:

✔ Savings in electrical consumption of around 30%, when comparing the use of a conventional thermal oil radiator to that which the fluid of the invention would use, maintaining the same thermal performance.

✔ It allows the thermal oils present on the market to be directly replaced, since incorporating carboxymethyl cellulose increases the viscosity of the resulting fluid. This makes it similar to that of a conventional thermal oil used as a heat sink in most heat generating devices.

✔ Reduction of the environmental impact associated with the use of the fluid proposed to replace thermal oil, as it does not include any fossil fuel-derived substance.

✔ Water acquisition cost.

However, after numerous trials and technical tests, it has been found that the thermal fluid of the aforementioned invention contains a formulation that does not meet its goal when the radiators are made from aluminium.

Thus, compared to the previous patent, this invention provides the improvement consisting of the use of sodium carbonate instead of sodium hydroxide.

This is because it has been found that due to the production of hydrogen gas, when aluminium is brought into contact with sodium hydroxide, a pressure is created inside its container, so it is not possible to use sodium hydroxide with aluminium.

For this reason, it was necessary to adjust and change the fluid formulation.

Although one constituent has been substituted for another in its composition, this substitution makes the resulting Fluid appropriate for the intended aluminium emitter-related purpose. The previous composition, in the terms already mentioned, made its application impossible in the said emitters, given that containing sodium hydroxide generated pressure inside the container, making it technically impossible to use sodium hydroxide with aluminium, as described in the previous invention.

As previously mentioned, this substitution, in the proportion in which it was carried out, was the result of numerous trials and technical tests carried out to make it viable to apply the Fluid of this invention to these specific emitters (carried out based on aluminium).

## EXPLANATION OF THE INVENTION

In WO2021/105531, the Thermal Transfer Fluid was characterised by the use of water (H2O) as a heat dissipation fluid, to which the following substances were added in the following approximate proportions by weight:

A. Between 0.8% and 1% carboxymethyl cellulose.
B. Between 0.2% and 0.7% silicates.
C. Between 0.3% and 0.5% of a chemical substance with alkaline properties.

In this case, the chemical substance with alkaline properties was Sodium Hydroxide (NaOH) or Potassium Hydroxide (KOH), and the equipment to obtain the Fluid consisted of an industrial reactor provided with a heating mantle and stirrer.

In summary, the composition of the said Fluid contained the following elements:

| CMC (carboxymethyl cellulose) |
| --- |
| Potassium silicate |
| **Sodium hydroxide** |

In this invention, however, the Fluid contains the following elements:

| CMC (carboxymethyl cellulose) |
| --- |
| Potassium silicate |
| **Sodium carbonate** |

Thus, water (H2O) is used again as a heat dissipation fluid, and the following substances are now added thereto in the approximate proportions by weight, as indicated below:

A. Between 0.4% and 4% carboxymethyl cellulose.
B. Between 0.5% and 3% potassium silicate.
C. Between 0.5% and 0.4% sodium carbonate, as a chemical substance with alkaline properties, in order to avoid corrosion in the device in which the resulting fluid is located and maintain a basic pH.

## PREFERRED EMBODIMENT OF THE INVENTION

Thus, in relation to the invention cited as background, sodium carbonate would be used in the composition instead of sodium hydroxide.

This change introduced is due to the reaction that occurs between sodium hydroxide and aluminium, producing hydrogen gas, as shown in the following reaction:

$$2Al(s) + 2NaOH(aq) + 2H2O\ (l) \rightarrow 2NaAlO2(s) + 3H2(g)$$

Due to the production of hydrogen gas when aluminium is brought into contact with sodium hydroxide, a pressure is created inside its container, so it is not possible to use sodium hydroxide with aluminium.

In the same manner as in the aforementioned background, in this case, the Thermal Fluid is obtained using an industrial reactor provided with the following additional elements:

A. Heating mantle, in order to accelerate and optimise the dissolution of the aforementioned substances.

B. An agitator that guarantees a uniform dissolution throughout the entire volume of fluid contained in the reactor.

Thus, the resulting Fluid can be applied as a thermal fluid, preventing the usual corrosion from occurring on containers when in contact with water, and its viscosity and energy efficiency are similar to that of the thermal oil it replaces.
More specifically, the fluid obtained can be applied in any installation or device requiring the use of a thermal fluid for its operation. For this reason, it is most frequently applied in thermal oil emitters, made from aluminium, which are used in the heating systems of buildings. In these, it can be used to replace thermal oil without any adaptation of the emitter, providing thermal performance equivalent to the oil it replaces and even greater energy efficiency, which can be extrapolated to emitters of any size. In all cases, and in application of this invention, the thermal performance of the emitters continues to be superior to that provided by oil-filled emitters at the same electrical power.

## Claims

1. Thermal fluid used inside aluminium thermal emitters, replacing mineral oil derived from petroleum, **characterised by** using water ($H_2O$) as a heat dissipation fluid to which the following substances are added in the approximate proportions by weight indicated:

   - Between 0.4% and 4% carboxymethyl cellulose.
   - Between 0.5% and 3% potassium silicate.
   - Between 0.5% and 0.4% sodium carbonate.

2. Thermal fluid used inside aluminium thermal emitters, replacing mineral oil derived from petroleum, according to claim 1, **characterised in that** the chemical substance with alkaline properties is sodium carbonate.

## Patentansprüche

1. Thermische flüssigkeit zur verwendung in aluminium-wärmeemittern, zum ersatz von mineralöl aus erdöl, **dadurch gekennzeichnet, dass** Wasser ($H_2O$) als Wärmeableitungsfluid verwendet wird, dem die folgenden Stoffe in den angegebenen ungefähren Gewichtsanteilen zugesetzt werden:

   - Zwischen 0,4 % und 4 % Carboxymethylcellulose.
   - Zwischen 0,5 % und 3 % Kaliumsilikat.
   - Zwischen 0,5 % und 0,4 % Natriumcarbonat.

2. Thermische flüssigkeit zur verwendung in aluminium-wärmeemittern, zum ersatz von mineralöl aus erdöl, gemäß Anspruch 1, **dadurch gekennzeichnet, dass** die chemische Substanz mit alkalischen Eigenschaften Natriumcarbonat ist.

## Revendications

1. Fluide thermique utilisé à l'intérieur d'émetteurs thermiques d'aluminium, remplaçant l'huile minérale provenant du pétrole, **caractérisé par** l'utilisation d'eau ($H_2O$) comme fluide de dissipation de chaleur à laquelle les substances suivantes sont ajoutées dans les proportions approximatives en poids indiquées :

   - Entre 0,4 % et 4 % de carboxyméthylcellulose.
   - Entre 0,5 % et 3 % de silicate de potassium.
   - Entre 0,5 % et 0,4 % de carbonate de sodium.

2. Fluide thermique utilisé à l'intérieur d'émetteurs thermiques d'aluminium, remplaçant l'huile minérale provenant du pétrole, selon la revendication 1, **caractérisé en ce que** la substance chimique à propriétés alcalines est le carbonate de sodium.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021105531 A